# FASCICULE DE BREVET EUROPEEN

(11) **EP 3 765 950 B1**
(45) Date de publication et mention de la délivrance du brevet: **14.08.2024**
(21) Numéro de dépôt: 19709534.2
(22) Date de dépôt: 14.03.2019
(51) Int. Cl.: G06F 3/0488, G06F 3/04842, B60K 35/00, G09G 5/14, G09G 5/377, B60K 35/10, B60K 35/20, B60K 35/21

(54) **PROCÉDÉ DE GESTION D'UN ÉCRAN TACTILE AFFICHANT DES OBJETS GRAPHIQUES PROVENANT DE SOURCES MULTIMÉDIA MULTIPLES**
VERFAHREN ZUR VERWALTUNG EINES BERÜHRUNGSBILDSCHIRMS, DER GRAFISCHE OBJEKTE ANZEIGT, DIE AUS MEHREREN MULTIMEDIA-QUELLEN STAMMEN
METHOD FOR MANAGING A TOUCHSCREEN DISPLAYING GRAPHIC OBJECTS COMING FROM MULTIPLE MULTIMEDIA SOURCES

(30) Priorité: 15.03.2018 FR 1852226
(43) Date de publication de la demande: 20.01.2021
(73) Titulaire: Ampere SAS, 92100 Boulogne-Billancourt (FR)
(72) Inventeur: COMPS, Christophe, 31270 Cugnaux (FR)
(74) Mandataire: Renault Group
(86) Numéro de dépôt international: PCT/EP2019/056490
(87) Numéro de publication internationale: WO 2019/175351

(56) Documents cités:
- EP-A1- 2 843 919
- US-A1- 2013 104 065
- US-A1- 2013 166 146
- US-A1- 2017 154 605
- US-A1- 2017 185 238

## Description

La présente invention concerne un procédé de gestion simultanée d'une pluralité d'objets graphiques manipulables provenant de sources multimédia multiples, chacun desdits objets graphiques manipulables étant affiché individuellement suivant une composition graphique commune sur un écran tactile présentant une surface de commande pour la saisie de commandes tactiles par un utilisateur.

On connaît certains systèmes multimédias qui sont composés de plusieurs sous-systèmes générant chacun, indépendamment, un contenu multimédia qui leur est propre. Chaque sous-système constitue une source multimédia respective du système multimédia, apte à créer un ou des objets graphiques destinés à être affichés. A titre d'exemple, de telles sources multimédia peuvent comprendre un système de navigation, notamment pour véhicule automobile, affichant des cartes sur un ou plusieurs écrans, un système d'alerte, notamment pour véhicule automobile, affichant des indications lumineuses et/ou des messages sur un ou plusieurs écrans. Ces sous-systèmes sont souvent dissociés, notamment en raison du fait qu'ils nécessitent d'être exécutés sur différents systèmes d'exploitation, virtualisés ou non au sein d'une même unité centrale de traitement (CPU), ou bien qu'ils nécessitent des niveaux de sécurité fonctionnelle différents. Quel que soit l'environnement informatique dans lequel sont déployés ces sous-systèmes, leur génération de contenus multimédia doit pouvoir être indifféremment affichée sur plusieurs écrans, incluant des écrans déportés, dont, typiquement, les sous-systèmes n'ont pas en charge la gestion de l'affichage.

Dans ce cas, chaque sous-système est conçu pour transmettre son contenu multimédia à un module de contrôle dédié à la prise en charge de l'affichage de l'écran sur lequel le contenu multimédia doit être affiché. Ce module de contrôle met en oeuvre des mécanismes connus permettant d'élaborer une composition graphique commune pour l'affichage des contenus multimédias provenant des différents sous-systèmes dont le contenu doit être affiché. En particulier, le module de contrôle comprend des moyens de stockage incluant une pluralité de mémoires d'image, chacune étant conçue pour stocker des données d'objets graphiques à afficher provenant des différents sous-systèmes.

Cependant, il n'existe pas, à l'heure actuelle, de mécanisme permettant de différencier des objets graphiques provenant de différentes sources lorsqu'elles sont gérées par des environnements logiciels et/ou matériels distincts (des mécanismes existent lorsque les sources différentes sont gérées au sein d'un même système d'exploitation) et ce, afin de gérer leurs propriétés (positionnement, redimensionnement, apparition et suppression, interaction avec des éléments d'une interface homme-machine contenus dans l'objet, comme des boutons ou des curseurs, etc.) par des commandes tactiles appliquées à l'objet affiché sur un écran tactile, typiquement par des mouvements du doigt sur l'écran.

Ainsi, on sait implémenter une composition graphique commune de différents objets graphiques provenant de sources multimédia différentes au sein d'un seul écran tactile. Plus précisément, différents contenus multimédias provenant de sources différentes peuvent être composés au sein d'un seul écran, mais à condition que le contenu associé à chaque source soit composé à l'intérieur d'une fenêtre graphique dédiée sur l'écran, définie par le module de contrôle en charge de la composition graphique finale et de la gestion de l'affichage de l'écran. Dans ce cas, le contenu de la fenêtre peut être affiché au sein de l'écran tactile, mais d'éventuelles interactions avec le contenu graphique de la fenêtre (boutons, curseurs...) ne peuvent pas être gérées directement au travers de l'écran tactile sur lequel la fenêtre est affichée. En effet, dans la mesure où la fenêtre est gérée par le module de contrôle en charge de l'affichage de l'écran tactile et non par la source externe générant le contenu graphique affichée dans la fenêtre, seules les propriétés de la fenêtre en tant que telle peuvent être contrôlées via l'écran tactile, tandis que les propriétés du contenu graphique de la fenêtre ne le peuvent pas.

Par exemple, un contenu vidéo provenant d'une source multimédia externe peut être redimensionné via une commande tactile appliquée à l'écran par exemple et affiché dans une nouvelle fenêtre redimensionnée gérée par le module de contrôle en charge de la composition graphique finale et de la gestion de l'affichage de l'écran. Par contre, s'il existe des boutons de contrôle affichés au sein de cette fenêtre et gérés par la source, par exemple des boutons pour jouer ou stopper la vidéo, ils sont inefficients lorsque l'utilisateur final tente d'interagir avec eux via l'écran tactile.

Or, aujourd'hui, dans le domaine automobile, avec le déploiement des tableaux de bord numériques, les attentes vis-à-vis du système graphique destiné à gérer l'affichage des contenus multimédia et des informations sur les écrans des habitacles automobiles, sont de plus en plus élevées. En particulier, dans le domaine automobile, il existe un besoin pour étendre les capacités du système graphique à des sources très différentes, et notamment à des sources ayant des niveaux d'exigence en termes de sécurité différents, par exemple générant du contenu en ASIL C/D (Automotive Safety Integrity Level), comme à des sources générant du contenu non influent sur la sécurité.

La demande de brevet EP2843919A1 divulgue un système permettant à un utilisateur d'interagir avec des objets sélectionnés dans des images issues de deux dispositifs source différents et qui sont affichées par duplication d'écran sur l'écran d'un dispositif récepteur.

Dans ce contexte, la présente invention a pour but de proposer un procédé permettant d'interagir via une commande tactile sur un écran tactile avec le contenu d'une pluralité d'objets graphiques affichés individuellement sur l'écran, quel que soit le type de source multimédia dont proviennent ces objets.

Résumé de l'invention L'invention est définie dans les revendications indépendantes 1 et 5. Les revendications dépendantes divulguent des caractéristiques particulières de certains modes de réalisation de l'invention.

Ainsi, l'invention concerne un procédé de gestion simultanée d'une pluralité d'objets graphiques manipulables provenant de sources multimédia multiples, chacun desdits objets graphiques manipulables étant affiché individuellement suivant une composition graphique commune sur un écran tactile présentant une surface de commande pour la saisie de commandes tactiles par un utilisateur, dans lequel :
on fournit à une unité de composition finale le contenu d'une pluralité de mémoires d'image sources, chaque mémoire d'image source stockant un plan graphique d'au moins un objet graphique créé par une source multimédia respective, ledit plan graphique comprenant des informations de couleur et de transparence dudit objet graphique pour chaque pixel dudit écran tactile;
on combine dans l'unité de composition finale lesdits plans graphiques de chaque mémoire d'image source suivant un ordre de superposition prédéfini, de façon à élaborer ladite composition graphique commune suivant laquelle est effectué l'affichage desdits objets graphiques manipulables sur ledit écran tactile,
on reçoit une commande tactile appliquée à une zone de l'écran, destinée à manipuler au moins un objet graphique manipulable affiché sur ladite zone de l'écran,
on identifie, au niveau de l'unité de composition finale, la source multimédia d'où provient ledit objet graphique manipulé, à partir à partir de l'ordre de superposition des plans graphiques et de l'information de transparence fournie par lesdits plans graphiques de ladite pluralité de mémoires d'image sources pour ladite zone de l'écran,
on transmet ladite commande tactile à ladite source multimédia identifiée qui va mettre à jour sa mémoire d'image source en fonction de ladite commande tactile reçue, et
on fournit à ladite unité de composition finale le contenu de ladite mémoire d'image source mise à jour, pour élaborer une nouvelle composition graphique commune tenant compte de la manipulation dudit objet graphique manipulé, pour affichage à l'écran.

L'invention permet ainsi, sur un écran tactile, d'interagir avec le(s) doigt(s) sur le contenu de chacun des objets graphiques présents individuellement sur l'écran (positionnement, redimensionnement, apparition et suppression, interaction avec une IHM inclue dans la fenêtre...). La mise en oeuvre du procédé de l'invention est avantageusement indépendante des matériels, des systèmes d'exploitation, des capacités graphiques hétérogènes, sur lesquels sont exécutés respectivement les différentes sources multimédia et l'unité de composition finale. L'invention peut être implémentée au travers d'unités centrales de traitement dédiées pour chaque source mais peut aussi avantageusement être implémentée sur une même unité centrale de traitement exécutant plusieurs systèmes d'exploitation virtualisés. Elle ne requiert pas de gestion du fenêtrage des sources multimédia par le système d'exploitation sur lequel s'exécute l'unité de composition finale. En outre, les différentes étapes de transmission de données mises en oeuvre par le procédé de l'invention sont avantageusement peu gourmandes en bande passante, car la transmission des informations liées aux commandes tactiles est limitée aux déplacements de l'objet graphique manipulé et est uniquement adressée à la source qui le gère. Cette invention peut être entièrement implémentée en « hardware », afin d'accélérer la réactivité des commandes tactiles.

Dans les modes de réalisation revendiqués, l'identification de ladite source multimédia d'où provient ledit objet graphique manipulé, consiste à utiliser l'information de transparence de chacun desdits plans graphiques, pris successivement selon ledit ordre de superposition, jusqu'à déterminer le plan graphique pour lequel l'information de transparence est différente de zéro pour ladite zone de l'écran considérée.

Avantageusement, on met à jour l'ordre de superposition desdits plans graphiques en fonction dudit plan graphique déterminé, de sorte à disposer ledit plan graphique déterminé au-dessus des autres et on applique ledit ordre de superposition mis à jour dans l'élaboration de ladite nouvelle composition graphique commune.

De préférence, on fournit une mémoire d'image source unique pour chaque source multimédia respective, ladite mémoire d'image source unique stockant un plan graphique commun pour le ou les objets graphiques à afficher créés par ladite source multimédia.

Dans les modes de réalisation revendiqués, on peut fournir une pluralité de mémoires d'image sources pour chaque source multimédia respective, chaque mémoire d'image source de chaque source multimédia respective stockant le plan graphique d'un unique objet graphique à afficher créé par ladite source multimédia.

Dans les modes de réalisation revendiqués, l'identification de ladite source multimédia d'où provient ledit objet graphique manipulé comprend en outre la détermination d'un identifiant de ladite mémoire d'image source correspondant audit objet manipulé et on transmet à ladite source multimédia identifiée ledit identifiant de ladite mémoire d'image source.

Dans les modes de réalisation revendiqués, on calcule dans le référentiel dudit objet graphique manipulé des coordonnées tactiles associées à ladite commande tactile appliquée sur l'écran à partir des coordonnées tactiles associées à ladite commande tactile dans le référentiel dudit écran et on transmet à ladite source multimédia identifiée lesdites coordonnées tactiles ainsi calculées.

L'invention concerne également un système de gestion simultanée d'une pluralité d'objets graphiques manipulables provenant de sources multimédia multiples, chacun desdits objets graphiques manipulables étant affiché individuellement suivant une composition graphique commune sur un écran tactile présentant une surface de commande pour la saisie de commandes tactiles par un utilisateur, ledit système étant caractérisé en ce qu'il comprend une unité de composition finale reliée d'une part, avec ledit écran et, d'autre part, avec chacune desdites sources multimédia multiples, ladite unité de composition finale étant adaptée pour :
- recevoir et stocker le contenu d'une pluralité de mémoires d'image sources, chaque mémoire d'image source stockant un plan graphique d'au moins un objet graphique créé par une source multimédia respective, ledit plan graphique comprenant des informations de couleur et de transparence dudit objet graphique pour chaque pixel dudit écran tactile,
- combiner lesdits plans graphiques de chaque mémoire d'image source reçue suivant un ordre de superposition prédéfini, de façon à élaborer ladite composition graphique commune pour affichage sur l'écran,
- recevoir et traiter une commande tactile appliquée à une zone de l'écran, destinée à manipuler au moins un objet graphique manipulable affichée sur ladite zone de l'écran,
   ladite unité de composition finale étant adaptée pour :
   - identifier la source multimédia d'où provient ledit objet graphique manipulé, à partir de l'information de transparence fournie par lesdits plans graphiques de ladite pluralité de mémoires d'image sources pour ladite zone de l'écran,
   - transmettre ladite commande tactile à ladite source multimédia identifiée,
   - recevoir de ladite source multimédia identifiée, le contenu de la mémoire d'image source associée, mise à jour par ladite source multimédia identifiée en fonction de ladite commande tactile,
   - élaborer une nouvelle composition graphique commune résultant de la manipulation dudit objet graphique manipulé, pour affichage à l'écran.

Dans les modes de réalisation revendiqués, ladite unité de composition finale est adaptée pour utiliser l'information de transparence de chacun desdits plans graphiques, pris successivement selon ledit ordre de superposition, jusqu'à déterminer le plan graphique pour lequel l'information de transparence est différente de zéro pour ladite zone de l'écran considérée.

Avantageusement, ladite unité de composition finale est adaptée pour mettre à jour l'ordre de superposition desdits plans graphiques en fonction dudit plan graphique déterminé, de sorte à disposer ledit plan graphique déterminé au-dessus des autres, et pour appliquer ledit ordre de superposition mis à jour dans l'élaboration de ladite nouvelle composition graphique commune.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 est une représentation schématique d'un système de gestion simultanée d'un écran tactile affichant une pluralité d'objets graphiques provenant de sources multiples, conforme à l'invention;
- la Figure 2 illustre schématiquement des exemples de commandes tactiles appliquées à l'écran de la figure 1 en vue du déplacement d'un objet graphique affiché à l'écran;
- la Figure 3 illustre un algorithme de décision permettant de déterminer de quelle source provient l'objet manipulé, conformément à l'invention.

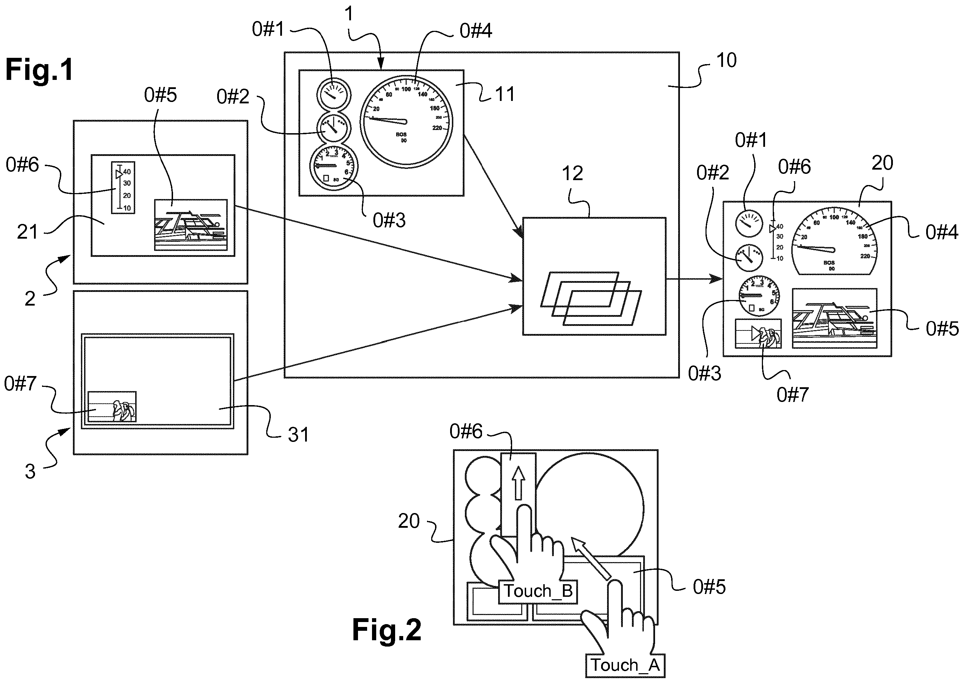

La Figure 1 illustre schématiquement un système pour la mise en oeuvre d'une composition graphique commune sur un écran tactile 20, réalisée à partir d'une pluralité de sources multimédias différentes 1, 2 et 3, fournissant chacune un contenu multimédia qui lui est propre. Le système comprend pour ce faire une unité de composition finale 10 en charge du contrôle de l'affichage de l'écran 1 et de la composition graphique finale vers l'écran 20, à partir du contenu multimédia fourni par chaque source multimédia connectée au système. L'unité de composition finale 10 peut par exemple se présenter sous la forme d'un processeur programmé à cet effet implémenté au sein d'une unité centrale de traitement dite principale, exécutant un seul système d'exploitation ou plusieurs systèmes d'exploitation virtualisés. A noter que chacune des sources multimédia 1, 2 et 3 peut être virtualisée et exécutée sur la même unité centrale de traitement principale ou être exécutée sur différentes unités centrales dédiées. Chaque source multimédia est adaptée pour créer un contenu graphique destiné à être transmis à l'unité de composition finale 10 pour être affiché sur l'écran 20. L'unité de composition finale 10 comprend également des interfaces de communication permettant de se connecter à au moins un réseau de communication filaire ou non filaire pour échanger des données avec les sources multimédia 1, 2 et 3 adaptées pour être connectées à ce réseau.

La création d'un contenu graphique signifie la création d'au moins un objet graphique par la source multimédia concernée dans la mémoire d'une unité centrale dédiée. Cette mémoire, dite mémoire d'image source, contient toutes l'information de localisation et de dimension de l'objet relativement aux pixels de l'écran sur lequel l'objet doit être affiché, ainsi que des informations de couleur et de transparence associées à cet objet. L'ensemble des ces informations correspond au plan graphique associé à l'objet ou aux objets graphiques créés par une source multimédia. Ladite information mémorisée dans la mémoire d'image source associée à une source multimédia peut être codée dans différents formats connus en soi, parmi lesquels par exemple le format YUV, RGB ou RGBa.

A noter que selon l'exemple de réalisation, l'unité de composition finale 10 implémente également une source multimédia 1, créatrice de contenu graphique. Ainsi, des objets graphiques O#1, O#2, O#3 et O#4, correspondant par exemple à des indicateurs de tableau de bord de véhicule automobile, sont graphiquement créés par la source multimédia 1 et stockés dans la mémoire d'image source 11 associée à la source multimédia 1. Ces objets graphiques sont pré-composés par l'unité de composition finale 10, qui gère aussi la composition graphique finale vers l'écran 20 du contenu multimédia provenant de l'ensemble des sources multimédia connectées au système.

Par ailleurs, toujours selon l'exemple de réalisation, des objets graphiques O#5 et O#6, correspondant par exemple à l'affichage d'une carte de navigation et à l'affichage d'un curseur permettant de modifier l'échelle de la carte de navigation, sont graphiquement créés par la source multimédia 2 et stockés dans la mémoire d'image source 21 associée à la source multimédia 2.

Enfin, un objet graphique O#7, correspondant par exemple à l'affichage du statut de lecture d'un fichier vidéo, est graphiquement créé par la source multimédia 3 et stockés dans la mémoire d'image source 31 associée à la source multimédia 3.

Dans cet exemple, la pré-composition des objets graphiques créés par une même source multimédia est faite par la source dans sa mémoire d'image source associée, prévue pour être de la taille de l'écran 20 sur lequel doit être réalisé l'affichage.

Les plans graphiques associés à chaque source multimédia sont ensuite fournis par les sources à l'unité de composition finale 10. Pour ce faire, les sources multimédia 2 et 3 sont connectées à l'unité de composition finale 10 par un protocole et un moyen de communication bidirectionnel, filaires ou non filaires, connus en soi, permettant de transmettre le contenu d'une mémoire d'image source à l'unité de composition finale 10 (par exemple de type Ethernet, USB, Wifi, Bluetooth, etc.). Cette liaison peut être sécurisée ou non.

L'unité de composition finale 10 est adaptée pour stocker le contenu des mémoires d'image sources reçu dans un plan graphique commun gérant la transparence, par exemple selon un format de type RGBa. Plus précisément, l'unité de composition finale 10 est conçue pour combiner les plans graphiques de chaque mémoire d'image source 11, 21, 31 suivant un ordre de superposition prédéfini, de façon à élaborer la composition graphique commune 12 suivant laquelle doit être effectué l'affichage sur l'écran 20 des différents objets graphiques O#1 à O#7 créés par les sources multiples. Dans ce contexte, le terme de « composition graphique commune » signifie la superposition de plusieurs plans graphiques complets (ou alternativement, de plusieurs objets graphiques, si seuls les objets graphiques, limités à une partie du plan graphique complet, sont envoyés respectivement par leurs sources, selon une variante de l'invention décrite plus en détail par la suite).

Ces plans ou objets graphiques sont superposés en respectant à la fois un niveau de priorité associé, définissant leur ordre de superposition dans la composition graphique commune, et leur transparence. En particulier, un plan graphique disposé « au-dessus » dans la superposition, mais semitransparent, laissera entrevoir les objets graphiques disposés « au-dessous » de lui. Une telle composition graphique peut être réalisée par des moyens connus en soi, matériels et/ou logiciels. A titre d'exemple, une méthode connue en soi dite par « color key » peut être utilisée pour définir la transparence associée au contenu d'une mémoire d'image source fourni. Le « color key » est une couleur de référence appliquée aux pixels de l'image et qui est utilisée pour signaler qu'il n'y a pas d'information graphique à cet endroit particulier de l'image. Autrement dit, cette méthode utilise une information de couleur pour créer des zones de transparence dans les pixels de l'image à partir de la couleur de référence déterminée. Une autre méthode connue consiste à utiliser une information supplémentaire de transparence, dite information « alpha » de l'image, pour définir le niveau de transparence pour chaque pixel de l'image. Ces deux méthodes connues peuvent être utilisées alternativement ou simultanément dans le cadre de la présente invention pour gérer l'information de transparence de chaque pixel associé à un plan graphique fourni par une source multimédia à l'unité de composition finale.

L'écran 20 comprend une surface de commande tactile permettant de détecter le toucher par exemple d'un ou plusieurs doigts de commande d'un utilisateur, lorsque l'utilisateur veut par exemple déplacer un objet graphique au sein de l'écran 20, tel que par exemple la carte de navigation O#5, ou interagir avec un élément placé dans un objet graphique, tel que par exemple le curseur de l'objet O#6 permettant de modifier l'échelle de la carte de navigation. De telles commandes tactiles destinées à manipuler les objets graphiques O#5 ou O#6, sont schématisées par les pictogrammes de doigt et de flèche associée, symbolisant le déplacement du doigt à la surface de l'écran, qui sont référencés respectivement Touch_A et Touch_B sur la figure 2.

Conformément à l'invention, dans le cas où un objet graphique affiché à l'écran 20 est manipulé par un utilisateur comme expliqué précédemment, l'unité de composition finale 10 est adaptée pour pouvoir identifier à quelle source multimédia appartient l'objet situé à l'emplacement de l'écran où le(s) doigt(s) de l'utilisateur est (sont) posé(s), en utilisant pour ce faire l'information de transparence contenue dans chacun des plans graphiques reçus des sources multimédia, ainsi que l'ordre de superposition des plans tel que défini dans la composition graphique finale.

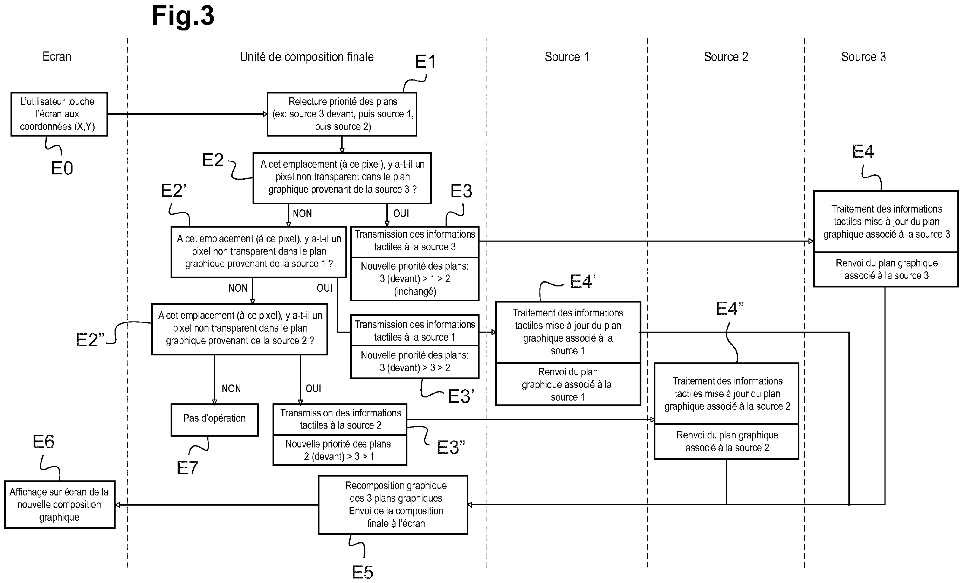

L'algorithme de décision mis en oeuvre par l'unité de composition finale est illustré à la figure 3. A l'étape E0, l'utilisateur touche l'écran aux coordonnées (X, Y) de celui-ci. La commande tactile correspondante est transmise de l'écran 20 vers l'unité de composition finale 10 en charge de la gestion de l'affichage de l'écran 20. Dans une étape E1, l'unité de composition finale 10 effectue une relecture du niveau de priorité des plans graphiques pour déterminer l'ordre de superposition des plans dans la composition graphique commune. Selon l'exemple donné ici, le plan graphique associé à la source 3 est disposé le plus « au-dessus », puis le plan graphique associé à la source 3, puis enfin celui associé à la source 2.

L'unité de composition finale 10 est alors conçue pour utiliser l'information de transparence de chacun des plans graphiques, pris successivement selon le dernier ordre de superposition connu, en commençant par le plan graphique disposé « au-dessus » des autres et en finissant par celui disposé le plus « au-dessous », jusqu'à déterminer le plan graphique pour lequel l'information de transparence est différente de zéro pour la zone de l'écran concernée par la commande tactile reçue. Par information de transparence différente de zéro, on entend une l'information de transparence dont l'interprétation conduit à considérer que la zone de l'écran considérée est non transparente et contient donc un objet graphique.

Ainsi, dans une étape E2, l'unité de composition finale 10 va déterminer s'il y a un pixel non transparent dans le plan graphique associé à la source 3 pour la zone considérée (au pixel correspondant aux coordonnées auxquelles l'utilisateur a touché l'écran). Comme expliqué précédemment, l'information de transparence est déterminée, soit par exemple, en identifiant si ce pixel de ce plan graphique a une couleur égale à la couleur de référence (« color key ») de ce plan graphique, soit, par exemple, en identifiant si l'information supplémentaire de transparence (information « alpha ») de ce pixel est fixé à 0%, auquel cas on considère que ce pixel est transparent et ne contient aucun objet graphique.

Si un pixel non transparent est identifié à l'étape E2, alors l'algorithme conclut qu'il existe un objet à cet emplacement de l'écran dans le plan graphique provenant de la source multimédia considérée, en l'occurrence la source 3 selon l'exemple. Auquel cas, dans une étape E3, l'unité de composition finale 10 est adaptée pour transmettre l'information liée à la commande tactile uniquement à la source multimédia 3 ainsi identifiée, qui va mettre à jour sa mémoire d'image source dans une étape E4. Dans le même temps, l'unité de composition finale 10 est adaptée pour mettre à jour l'ordre de superposition des plans graphiques en fonction du plan graphique qui a été déterminé à l'étape E2, de sorte à disposer ce plan graphique au-dessus des autres. Autrement dit, l'ordre de superposition des plans graphiques est configurable dynamiquement et le plan graphique qui passe en position la plus « devant » dans la superposition des plans est le plan graphique contenant l'objet qui vient d'être touché. Ainsi, l'utilisateur pourra déplacer l'objet pardessus les autres objets puisque l'objet concerné reste sur le plan graphique disposé le plus « devant ».

La source 3 va donc traiter la commande tactile dans l'étape E4. La source 3 va gérer le déplacement de l'objet graphique dans sa propre mémoire d'image source en fonction de la commande tactile reçue commandant le déplacement de l'objet. Autrement dit, en temps réel, la source 3 rafraîchit le positionnement de l'objet graphique dans sa mémoire d'image source en fonction de la commande tactile et envoie régulièrement le contenu rafraîchi à l'unité de composition finale 10.

Dans une étape E5, l'unité de composition finale 10 élabore une nouvelle composition graphique commune mise à jour à partir des plans graphiques reçus, y compris le plan graphique mis à jour par la source 3, et transmet cette nouvelle composition graphique commune pour affichage à l'écran dans une étape E6.

Par contre, si aucun pixel non transparent n'est identifié à l'étape E2 à l'emplacement de l'écran considéré pour le plan graphique courant, cette étape d'identification d'un pixel non transparent est répétée dans une étape E2' pour le plan graphique suivant dans l'ordre de superposition tel que défini dans la composition graphique commune, en l'occurrence pour le plan graphique provenant de la source 1 selon l'exemple. Si le test d'existence d'un pixel non transparent s'avère positif pour le plan graphique en question à l'étape E2', on met alors en oeuvre les étapes E3' et E4' correspondant aux étapes E3 et E4 déjà décrites, en relation cette fois avec la source 1.

De la même façon, si aucun pixel non transparent n'est identifié à l'étape E2' à l'emplacement de l'écran considéré pour le plan graphique courant, cette étape d'identification d'un pixel non transparent est répétée dans une étape E2" pour le plan graphique suivant dans l'ordre de superposition tel que défini dans la composition graphique commune, en l'occurrence pour le plan graphique provenant de la source 2 selon l'exemple. Si le test d'existence d'un pixel non transparent s'avère positif pour le plan graphique en question à l'étape E2", on met alors en oeuvre les étapes E3" et E4" correspondant aux étapes E3 et E4 déjà décrites, en relation cette fois avec la source 2.

Enfin, si aucun pixel non transparent n'est finalement identifié à l'étape E2", alors l'algorithme s'arrête dans une étape E7.

Alternativement, les sources multimédia peuvent envoyer à l'unité de composition finale 10 le contenu de plusieurs mémoires d'image sources, contenant chacune uniquement le plan graphique d'un seul objet graphique à afficher, au lieu d'envoyer un plan graphique complet comprenant l'ensemble des objets créés par la source. Dans ce cas, des fenêtres graphiques sont réservées par l'unité de composition finale 10 pour chaque plan graphique afin de les combiner dans la composition graphique commune. Les déplacements et redimensionnements des fenêtres graphiques sont alors gérés par l'unité de composition finale 10, tandis que l'interaction (par exemple, la gestion des boutons/curseurs) avec un objet à l'intérieur de la fenêtre graphique dédié seront gérés par les sources, en utilisant les principes de l'invention. Dans ce cas, l'identification de la source multimédia d'où provient ledit objet graphique manipulé comprend également la détermination d'un identifiant de la mémoire d'image source contenant le plan graphique correspondant à l'objet manipulé. Ainsi, lors du toucher sur l'écran, aux étapes E3, E3', E3", l'unité de composition finale1 0 transmettra également cet identifiant à la source identifiée comme ayant créé l'objet. Dans le cas d'implémentation où l'unité de composition finale 10 gère la position des objets sur l'écran et que cette position n'est pas connue des différentes sources, les coordonnées tactiles de chacun des doigts appuyant sur l'écran seront recalculées afin de tenir compte du décalage de la position de l'objet dans la composition graphique finale ; par exemple, si l'objet est un rectangle de dimensions de 300 pixels de largeur par 300 pixels de hauteur et dont les coordonnées haut, gauche sont de (x0=100, y0=150) pixels dans la composition finale ; si l'appui du doigt se fait aux coordonnées de l'écran (xd=250, yd=350), c'est-à-dire à l'intérieur de cet objet, alors les coordonnées tactiles renvoyées à la source identifiée seront de x = xd - x0 = 250 - 100 = 150, et y = yd - y0 = 350 - 150 = 200. Le calcul de ce décalage permet à la source de repérer le point d'appui tactile dans le référentiel de son objet graphique.

## Revendications

1. Procédé de gestion simultanée d'une pluralité d'objets graphiques manipulables (O#1-O#7) provenant de sources multimédia multiples (1-3), les sources multimédia étant exécutées par des systèmes d'exploitation différents, chacun desdits objets graphiques manipulables étant affiché individuellement suivant une composition graphique commune (12) sur un écran tactile (20) présentant une surface de commande pour la saisie de commandes tactiles par un utilisateur, dans lequel :
on fournit à une unité de composition finale (10) le contenu d'une pluralité de mémoires d'image sources (11, 21, 31) pour chaque source multimédia respective, chaque mémoire d'image source de chaque source multimédia respective stockant un plan graphique d'un unique objet graphique à afficher créé par la source multimédia respective, ledit plan graphique comprenant des informations de couleur et de transparence dudit objet graphique pour chaque pixel dudit écran tactile;
on combine dans l'unité de composition finale (10) lesdits plans graphiques de chaque mémoire d'image source suivant un ordre de superposition prédéfini, de façon à élaborer ladite composition graphique commune (12) suivant laquelle est effectué l'affichage desdits objets graphiques manipulables sur ledit écran tactile,
on reçoit une commande tactile appliquée à une zone de l'écran (20), destinée à manipuler au moins un objet graphique manipulable affiché sur ladite zone de l'écran,
on identifie (E2), au niveau de l'unité de composition finale (10), la source multimédia d'où provient ledit objet graphique manipulé, à partir de l'ordre de superposition des plans graphiques et de l'information de transparence fournie par lesdits plans graphiques de ladite pluralité de mémoires d'image sources pour ladite zone de l'écran, l'identification de ladite source multimédia (1-3) d'où provient ledit objet graphique manipulé, consistant à utiliser l'information de transparence de chacun desdits plans graphiques, pris successivement selon ledit ordre de superposition, jusqu'à déterminer le plan graphique pour lequel l'information de transparence est différente de zéro pour ladite zone de l'écran considérée,
on transmet (E3) ladite commande tactile à ladite source multimédia identifiée qui va mettre à jour (E4) sa mémoire d'image source en fonction de ladite commande tactile reçue,
on calcule dans le référentiel dudit objet graphique manipulé des coordonnées tactiles associées à ladite commande tactile appliquée sur l'écran à partir des coordonnées tactiles associées à ladite commande tactile dans le référentiel dudit écran et on transmet à ladite source multimédia identifiée lesdites coordonnées tactiles ainsi calculées, et
on fournit à ladite unité de composition finale (10) le contenu de ladite mémoire d'image source mise à jour, pour élaborer une nouvelle composition graphique commune tenant compte de la manipulation dudit objet graphique manipulé, pour affichage à l'écran.

2. Procédé selon la revendication 1, **caractérisé en ce qu'**on met à jour l'ordre de superposition desdits plans graphiques en fonction dudit plan graphique déterminé, de sorte à disposer ledit plan graphique déterminé au-dessus des autres et on applique ledit ordre de superposition mis à jour dans l'élaboration de ladite nouvelle composition graphique commune.

3. Procédé selon l'une quelconque des revendications précédentes, **caractérisé en ce qu'**on fournit une mémoire d'image source unique pour chaque source multimédia respective, ladite mémoire d'image source unique stockant un plan graphique commun pour le ou les objets graphiques à afficher créés par ladite source multimédia.

4. Procédé selon l'une quelconque des revendications précédentes, **caractérisé en ce que** l'identification de ladite source multimédia d'où provient ledit objet graphique manipulé comprend en outre la détermination d'un identifiant de ladite mémoire d'image source correspondant audit objet manipulé et **en ce qu'**on transmet à ladite source multimédia identifiée ledit identifiant de ladite mémoire d'image source.

5. Système de gestion simultanée d'une pluralité d'objets graphiques manipulables (O#1-O#7) provenant de sources multimédia multiples (1-3), les sources multimédia étant exécutées par des systèmes d'exploitation différents, chacun desdits objets graphiques manipulables étant affiché individuellement suivant une composition graphique commune (12) sur un écran tactile (20) présentant une surface de commande pour la saisie de commandes tactiles par un utilisateur, ledit système étant **caractérisé en ce qu'**il comprend une unité de composition finale (10) reliée d'une part, avec ledit écran (20) et, d'autre part, avec chacune desdites sources multimédia multiples (1-3), ladite unité de composition finale (10) étant adaptée pour :
- recevoir et stocker le contenu d'une pluralité de mémoires d'image sources (11, 21, 31) pour chaque source multimédia respective, chaque mémoire d'image source de chaque source multimédia respective stockant un plan graphique d'un unique objet graphique à afficher créé par la source multimédia respective, ledit plan graphique comprenant des informations de couleur et de transparence dudit objet graphique pour chaque pixel dudit écran tactile,
- combiner lesdits plans graphiques de chaque mémoire d'image source reçue suivant un ordre de superposition prédéfini, de façon à élaborer ladite composition graphique commune (12) pour affichage sur l'écran,
- recevoir et traiter une commande tactile appliquée à une zone de l'écran, destinée à manipuler au moins un objet graphique manipulable affiché sur ladite zone de l'écran, ladite unité de composition finale (10) étant adaptée pour :
- identifier la source multimédia d'où provient ledit objet graphique manipulé, à partir de l'ordre de superposition des plans graphiques et de l'information de transparence fournie par lesdits plans graphiques de ladite pluralité de mémoires d'image sources pour ladite zone de l'écran, l'identification de ladite source multimédia (1-3) d'où provient ledit objet graphique manipulé, consistant à utiliser l'information de transparence de chacun desdits plans graphiques, pris successivement selon ledit ordre de superposition, jusqu'à déterminer le plan graphique pour lequel l'information de transparence est différente de zéro pour ladite zone de l'écran considérée,
- transmettre ladite commande tactile à ladite source multimédia identifiée,
- calculer dans le référentiel dudit objet graphique manipulé des coordonnées tactiles associées à ladite commande tactile appliquée sur l'écran à partir des coordonnées tactiles associées à ladite commande tactile dans le référentiel dudit écran et transmettre à ladite source multimédia identifiée lesdites coordonnées tactiles ainsi calculées,
- recevoir de ladite source multimédia identifiée, le contenu de la mémoire d'image source associée, mise à jour par ladite source multimédia identifiée en fonction de ladite commande tactile,
- élaborer une nouvelle composition graphique commune résultant de la manipulation dudit objet graphique manipulé, pour affichage à l'écran.

6. Système selon la revendication 5, **caractérisé en ce que** ladite unité de composition finale est adaptée pour utiliser l'information de transparence de chacun desdits plans graphiques, pris successivement selon ledit ordre de superposition, jusqu'à déterminer le plan graphique pour lequel l'information de transparence est différente de zéro pour ladite zone de l'écran considérée.

7. Système selon la revendication 6, **caractérisé en ce que** ladite unité de composition finale est adaptée pour mettre à jour l'ordre de superposition desdits plans graphiques en fonction dudit plan graphique déterminé, de sorte à disposer ledit plan graphique déterminé au-dessus des autres, et pour appliquer ledit ordre de superposition mis à jour dans l'élaboration de ladite nouvelle composition graphique commune.

## Patentansprüche

1. Verfahren zur gleichzeitigen Verwaltung einer Mehrzahl von manipulierbaren grafischen Objekten (O#1-O#7), die aus mehreren Multimediaquellen (1-3) stammen, wobei die Multimediaquellen von verschiedenen Betriebssystemen ausgeführt werden, wobei jedes der manipulierbaren grafischen Objekte einzeln gemäß einer gemeinsamen grafischen Zusammenstellung (12) auf einem Berührungsbildschirm (20) angezeigt wird, der eine Bedienoberfläche zum Eingeben von Berührungsbefehlen durch einen Benutzer aufweist, wobei:
einer Einheit zur finalen Zusammenstellung (10) der Inhalt einer Mehrzahl von Quellenbildspeichern (11, 21, 31) für jede jeweilige Multimediaquelle bereitgestellt wird, wobei jeder Quellenbildspeicher jeder jeweiligen Multimediaquelle einen grafischen Plan eines einzigen anzuzeigenden grafischen Objekts speichert, das von der jeweiligen Multimediaquelle erzeugt wird, wobei der grafische Plan Farb- und Transparenzinformationen des grafischen Objekts für jedes Pixel des Berührungsbildschirms umfasst;
in der Einheit zur finalen Zusammenstellung (10) die grafischen Pläne jedes Quellenbildspeichers gemäß einer vorgegebenen Überlagerungsreihenfolge kombiniert werden,
so dass die gemeinsame grafische Zusammenstellung (12) erstellt wird, gemäß der die Anzeige der manipulierbaren grafischen Objekte auf dem Berührungsbildschirm erfolgt, ein auf einen Bereich des Bildschirms (20) angewandter Berührungsbefehl empfangen wird, der dazu bestimmt ist,
mindestens ein auf dem Bereich des Bildschirms angezeigtes manipulierbares grafisches Objekt zu manipulieren,
an der Einheit zur finalen Zusammenstellung (10) die Multimediaquelle, aus der das manipulierte grafische Objekt stammt, anhand der Überlagerungsreihenfolge der grafischen Pläne und der von den grafischen Plänen der Mehrzahl von Quellenbildspeichern für den Bereich des Bildschirms bereitgestellten Transparenzinformation ermittelt wird (E2), wobei das Ermitteln der Multimediaquelle (1-3), aus der das manipulierte grafische Objekt stammt, darin besteht, die Transparenzinformation jedes der grafischen Pläne, die nacheinander gemäß der Überlagerungsreihenfolge herangezogen werden, zu verwenden, bis der grafische Plan bestimmt wird, für den die Transparenzinformation für den betrachteten Bereich des Bildschirms von null verschieden ist,
der Berührungsbefehl an die ermittelte Multimediaquelle übertragen wird (E3), die ihren Quellenbildspeicher in Abhängigkeit von dem empfangenen Berührungsbefehl aktualisieren wird (E4),
in dem Bezugssystem des manipulierten grafischen Objekts Berührungskoordinaten, die dem auf den Bildschirm angewandten Berührungsbefehl zugeordnet sind, anhand der dem Berührungsbefehl in dem Bezugssystem des Bildschirms zugeordneten Berührungskoordinaten berechnet werden und
die so berechneten Berührungskoordinaten an die ermittelte Multimediaquelle übertragen werden, und
der Einheit zur finalen Zusammenstellung (10) der Inhalt des aktualisierten Quellenbildspeichers bereitgestellt wird, um eine neue gemeinsame grafische Zusammenstellung unter Berücksichtigung der Manipulation des manipulierten grafischen Objekts zur Anzeige auf dem Bildschirm zu erstellen.

2. Verfahren nach Anspruch 1, **dadurch gekennzeichnet, dass** die Überlagerungsreihenfolge der grafischen Pläne in Abhängigkeit von dem bestimmten grafischen Plan aktualisiert wird, so dass der bestimmte grafische Plan über den anderen angeordnet wird, und die aktualisierte Überlagerungsreihenfolge bei der Erstellung der neuen gemeinsamen grafischen Zusammenstellung angewandt wird.

3. Verfahren nach einem der vorhergehenden Ansprüche, **dadurch gekennzeichnet, dass** ein einziger Quellenbildspeicher für jede jeweilige Multimediaquelle bereitgestellt wird, wobei der einzige Quellenbildspeicher einen gemeinsamen grafischen Plan für das oder die anzuzeigenden grafischen Objekte speichert, die von der Multimediaquelle erzeugt werden.

4. Verfahren nach einem der vorhergehenden Ansprüche, **dadurch gekennzeichnet, dass** das Ermitteln der Multimediaquelle, aus der das manipulierte grafische Objekt stammt, ferner das Bestimmen einer Kennung des Quellenbildspeichers umfasst, der dem manipulierten Objekt entspricht, und dass an die ermittelte Multimediaquelle die Kennung des Quellenbildspeichers übertragen wird.

5. System zur gleichzeitigen Verwaltung einer Mehrzahl von manipulierbaren grafischen Objekten (O#1-O#7), die aus mehreren Multimediaquellen (1-3) stammen, wobei die Multimediaquellen von verschiedenen Betriebssystemen ausgeführt werden, wobei jedes der manipulierbaren grafischen Objekte einzeln gemäß einer gemeinsamen grafischen Zusammenstellung (12) auf einem Berührungsbildschirm (20) angezeigt wird, der eine Bedienoberfläche zum Eingeben von Berührungsbefehlen durch einen Benutzer aufweist, wobei das System **dadurch gekennzeichnet ist, dass** es eine Einheit zur finalen Zusammenstellung (10) umfasst, die zum einen mit dem Bildschirm (20) und zum anderen mit jeder der mehreren Multimediaquellen (1-3) verbunden ist, wobei die Einheit zur finalen Zusammenstellung (10) dazu eingerichtet ist:
- den Inhalt einer Mehrzahl von Quellenbildspeichern (11, 21, 31) für jede jeweilige Multimediaquelle zu empfangen und zu speichern, wobei jeder Quellenbildspeicher jeder jeweiligen Multimediaquelle einen grafischen Plan eines einzigen anzuzeigenden grafischen Objekts speichert, das von der jeweiligen Multimediaquelle erzeugt wird, wobei der grafische Plan Farb- und Transparenzinformationen des grafischen Objekts für jedes Pixel des Berührungsbildschirms umfasst;
- die grafischen Pläne jedes empfangenen Quellenbildspeichers gemäß einer vorgegebenen Überlagerungsreihenfolge zu kombinieren, so dass die gemeinsame grafische Zusammenstellung (12) zur Anzeige auf dem Bildschirm erstellt wird,
- einen auf einen Bereich des Bildschirms angewandten Berührungsbefehl zu empfangen und zu verarbeiten, der dazu bestimmt ist, mindestens ein auf dem Bereich des Bildschirms angezeigtes manipulierbares grafisches Objekt zu manipulieren,
wobei die Einheit zur finalen Zusammenstellung (10) dazu eingerichtet ist:
- die Multimediaquelle, aus der das manipulierte grafische Objekt stammt, anhand der Überlagerungsreihenfolge der grafischen Pläne und der von den grafischen Plänen der Mehrzahl von Quellenbildspeichern für den Bereich des Bildschirms bereitgestellten Transparenzinformation zu ermitteln, wobei das Ermitteln der Multimediaquelle (1-3), aus der das manipulierte grafische Objekt stammt, darin besteht, die Transparenzinformation jedes der grafischen Pläne, die nacheinander gemäß der Überlagerungsreihenfolge herangezogen werden, zu verwenden, bis der grafische Plan bestimmt wird, für den die Transparenzinformation für den betrachteten Bereich des Bildschirms von null verschieden ist,
- den Berührungsbefehl an die ermittelte Multimediaquelle zu übertragen,
- in dem Bezugssystem des manipulierten grafischen Objekts Berührungskoordinaten, die dem auf den Bildschirm angewandten Berührungsbefehl zugeordnet sind, anhand der dem Berührungsbefehl in dem Bezugssystem des Bildschirms zugeordneten Berührungskoordinaten zu berechnen und die so berechneten Berührungskoordinaten an die ermittelte Multimediaquelle zu übertragen,
- von der ermittelten Multimedia-Quelle den Inhalt des zugeordneten Quellenbildspeichers zu empfangen, der von der ermittelten Multimediaquelle in Abhängigkeit von dem Berührungsbefehl aktualisiert wurde,
- eine neue gemeinsame grafische Zusammenstellung, die aus der Manipulation des manipulierten grafischen Objekts resultiert, zur Anzeige auf dem Bildschirm zu erstellen.

6. System nach Anspruch 5,
**dadurch gekennzeichnet, dass** die Einheit zur finalen Zusammenstellung dazu eingerichtet ist, die Transparenzinformation jedes der grafischen Pläne, die nacheinander gemäß der Überlagerungsreihenfolge herangezogen werden, zu verwenden, bis der grafischen Plan bestimmt wird, für den die Transparenzinformation für den betrachteten Bereich des Bildschirms von null verschieden ist.

7. System nach Anspruch 6,
**dadurch gekennzeichnet, dass** die Einheit zur finalen Zusammenstellung dazu eingerichtet ist, die Überlagerungsreihenfolge der grafischen Pläne in Abhängigkeit von dem bestimmten grafischen Plan zu aktualisieren, so dass der bestimmte grafische Plan über den anderen angeordnet wird, und die aktualisierte Überlagerungsreihenfolge bei der Erstellung der neuen gemeinsamen grafischen Zusammenstellung anzuwenden.

## Claims

1. Method for simultaneously managing a plurality of manipulable graphic objects (0#1-0#7) coming from multiple multimedia sources (1-3), the multimedia sources being executed by different operating systems, each of said manipulable graphic objects being displayed individually according to a common graphic composition (12) on a touchscreen (20) having a control surface for the input of touch controls by a user, wherein:
the content of a plurality of source image memories (11, 21, 31) for each respective multimedia source is provided to a final composition unit (10), each source image memory of each respective multimedia source storing a graphic plane of a single graphic object to display created by the respective multimedia source, said graphic plane comprising information relating to the colour and
transparency of said graphic object for each pixel of said touchscreen;
said graphic planes of each source image memory are combined in the final composition unit (10) according to a predefined superposition order so as to create said common graphic composition (12) according to which said manipulable graphic objects are displayed on said touchscreen,
a touch control applied to an area of the screen (20),
intended to manipulate at least one manipulable graphic object displayed on said area of the screen, is received, at the final composition unit (10), the multimedia source from where said manipulated graphic object comes is identified (E2) on the basis of the order of superposition of the graphic planes and the transparency information provided by said graphic planes of said plurality of source image memories for said area of the screen, the identification of said multimedia source (1-3) from where said manipulated graphic object comes consisting in using the transparency information of each of said graphic planes, taken successively according to said superposition order, up until determining the graphic plane for which the transparency information is different to zero for said area of the screen in question,
said touch control is transmitted (E3) to said identified multimedia source which will update (E4) its source image memory on the basis of said received touch control,
in the frame of reference of said manipulated graphic object, touch coordinates associated with said touch control applied to the screen are calculated on the basis of the touch coordinates associated with said touch control in the frame of reference of said screen and said touch coordinates calculated in this way are transmitted to said identified multimedia source, and
the content of said updated source image memory is provided to said final composition unit (10) so as to create a new common graphic composition which takes into account the manipulation of said manipulated graphic object, for display on the screen.

2. Method according to Claim 1, **characterized in that** the order of superposition of said graphic planes is updated on the basis of said determined graphic plane so as to position said determined graphic plane on top of the others and said updated superposition order is applied in the creation of said new common graphic composition.

3. Method according to either one of the preceding claims, **characterized in that** a single source image memory for each respective multimedia source is provided, said single source image memory storing a common graphic plane for the one or more graphic objects to display created by said multimedia source.

4. Method according to any one of the preceding claims, **characterized in that** the identification of said multimedia source from where said manipulated graphic object comes further comprises the determination of an identifier of said source image memory corresponding to said manipulated object and **in that** said identifier of said source image memory is transmitted to said identified multimedia source.

5. System for simultaneously managing a plurality of manipulable graphic objects (0#1-0#7) coming from multiple multimedia sources (1-3), the multimedia sources being executed by different operating systems, each of said manipulable graphic objects being displayed individually according to a common graphic composition (12) on a touchscreen (20) having a control surface for the input of touch controls by a user, said system being **characterized in that** it comprises a final composition unit (10) connected, on the one hand, to said screen (20) and, on the other hand, to each of said multiple multimedia sources (1-3), said final composition unit (10) being designed to:
- receive and store the content of a plurality of source image memories (11, 21, 31) for each respective multimedia source, each source image memory of each respective multimedia source storing a graphic plane of a single graphic object to display created by the respective multimedia source, said graphic plane comprising information relating to the colour and transparency of said graphic object for each pixel of said touchscreen,
- combine said graphic planes of each received source image memory according to a predefined superposition order so as to create said common graphic composition (12) for display on the screen,
- receive and process a touch control applied to an area of the screen, intended to manipulate at least one manipulable graphic object displayed on said area of the screen,
said final composition unit (10) being designed to:
- identify the multimedia source from where said manipulated graphic object comes, on the basis of the order of superposition of the graphic planes and the transparency information provided by said graphic planes of said plurality of source image memories for said area of the screen, the identification of said multimedia source (1-3) from where said manipulated graphic object comes consisting in using the transparency information of each of said graphic planes, taken successively according to said superposition order, up until determining the graphic plane for which the transparency information is different to zero for said area of the screen in question,
- transmit said touch control to said identified multimedia source,
- calculate, in the frame of reference of said manipulated graphic object, touch coordinates associated with said touch control applied to the screen on the basis of the touch coordinates associated with said touch control in the frame of reference of said screen and transmit said touch coordinates calculated in this way to said identified multimedia source,
- receive, from said identified multimedia source, the content of the associated source image memory, updated by said identified multimedia source on the basis of said touch control,
- create a new common graphic composition resulting from the manipulation of said manipulated graphic object, for display on the screen.

6. System according to Claim 5,
**characterized in that** said final composition unit is designed to use the transparency information of each of said graphic planes, taken successively according to said superposition order, up until determining the graphic plane for which the transparency information is different to zero for said area of the screen in question.

7. System according to Claim 6,
**characterized in that** said final composition unit is designed to update the order of superposition of said graphic planes on the basis of said determined graphic plane so as to position said determined graphic plane on top of the others, and to apply said updated superposition order in the creation of said new common graphic composition.
